(19) Europäisches Patentamt
European Patent Office
Office européen des brevets

(11) Veröffentlichungsnummer: **0 351 367**
**A2**

(12) **EUROPÄISCHE PATENTANMELDUNG**

(21) Anmeldenummer: **89810504.4**

(22) Anmeldetag: **04.07.89**

(51) Int. Cl.$^5$: **C 09 B 23/14**
D 06 P 1/16

(30) Priorität: **11.07.88 CH 2644/88**

(43) Veröffentlichungstag der Anmeldung:
**17.01.90 Patentblatt 90/03**

(84) Benannte Vertragsstaaten:
**BE CH DE ES FR GB IT LI**

(71) Anmelder: **CIBA-GEIGY AG**
**Klybeckstrasse 141**
**CH-4002 Basel (CH)**

(72) Erfinder: **Liechti, Peter, Dr.**
**Alte Olsbergerstrasse 17**
**CH-4422 Arisdorf (CH)**

**Clément, Antoine**
**Laufenburgerstrasse 2/5**
**CH-4058 Basel (CH)**

(54) **Dispersionsfarbstoffe, enthaltend eine Tricyanovinylgruppierung.**

(57) Die neuen Dispersionsfarbstoffe der im Anspruch 1 angegebenen Formel eignen sich insbesondere zum Färben von Textilmaterial aus Polyesterfasern.

EP 0 351 367 A2

**Beschreibung**

**Dispersionsfarbstoffe, enthaltend eine Tricyanovinylgruppierung**

Die vorliegende Erfindung bezieht sich auf Dispersionsfarbstoffe, Verfahren zu deren Herstellung sowie deren Verwendung zum Färben von synthetischem organischem Material.

Die erfindungsgemässen Farbstoffe entsprechen der Formel

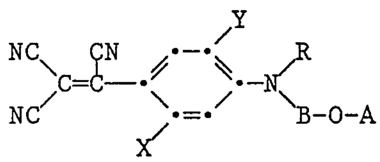
(1)

worin

X Wasserstoff, $C_1$-$C_4$-Alkyl, $C_1$-$C_4$-Alkoxy oder Halogen,

Y Wasserstoff, Halogen, $C_1$-$C_4$-Alkyl, $C_1$-$C_4$-Alkoxy, $C_1$-$C_4$-Alkoxy-$C_1$-$C_4$-alkyl oder $C_1$-$C_4$-Alkoxy-$C_1$-$C_4$-alkoxy,

R Wasserstoff, $C_1$-$C_{12}$-Alkyl, $C_2$-$C_{12}$-Alkenyl oder Phenyl bedeutet, oder Y und R, zusammen mit dem Stickstoffatom und den beiden sie verbindenden C-Atomen, einen 5- oder 6-Ring bilden,

B einen geradkettigen oder verzweigten $C_2$-$C_6$-Alkylenrest,

A einen Rest der Formel

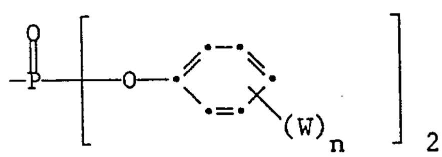
(2)

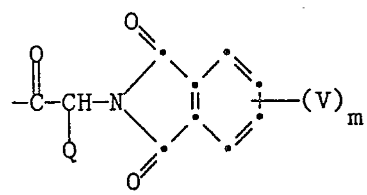
(3)

oder

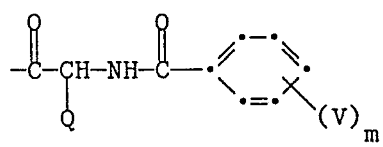
(4)

bedeutet, wobei

W $C_1$-$C_9$-Alkyl, $C_5$-$C_7$-Cycloalkyl, Phenyl, Halogen oder $C_1$-$C_4$-Alkoxy,

n 0, 1, 2 oder 3,

Q H oder $C_1$-$C_4$-Alkyl,

V Halogen und

m 0, 1, 2, 3 oder 4 bedeuten.

Unter Alkylgruppen sind in dieser Anmeldung generell geradkettige, verzweigte oder cyclische Alkylgruppen zu verstehen. Es handelt sich z.B. um Methyl, Ethyl, Propyl, i-Propyl, Butyl, sec.-Butyl, i-Butyl, tert.-Butyl, Amyl, tert.-Amyl (1,1-Dimethylpropyl), 1,1,3,3-Tetramethylbutyl, Hexyl, 1-Methylpentyl, Neopentyl, 1-, 2- oder 3-Methylhexyl, Heptyl, n-Octyl, tert. Octyl, 2-Ethylhexyl, n-Nonyl, Isononyl, Cyclopentyl, Cyclohexyl, Methylcyclohexyl sowie die dazugehörenden Isomeren.

Diese Alkylreste können substituiert sein, z.B. durch Hydroxy, Alkoxy, mit 1 bis 4 Kohlenstoffatomen, insbesondere Methoxy, Cyano oder Phenyl. Als weitere Substituenten sind geeignet Halogen, wie Fluor, Chlor oder Brom, oder -CO-U, worin U Alkyl mit 1 bis 6 Kohlenstoffatomen oder Phenyl ist.

Als Alkenylreste kommen solche Reste in Betracht, welche sich von den oben aufgeführten Alkylresten durch Ersatz mindestens einer Einfachbindung durch eine Doppelbindung ableiten. Geeignete Reste sind z.B. Ethenyl oder Propenyl.

Geeignete Alkoxyreste sind z.B. Methoxy, Ethoxy, Propoxy, iso-Propoxy, n-Butoxy, i-Butoxy oder

tert.-Butoxy.

Beispiele für geeignete substituierte Alkylreste sind: Methoxymethyl, Ethoxymethyl, Ethoxyethyl, Ethoxypropyl, n-Propoxymethyl, iso-Propoxymethyl, Butoxymethyl, Butoxyethyl, Butoxypropyl, Ethoxypentyl, Methoxybutyl, Ethoxypentyl, 2-Hydroxyethoxypentyl, Cyanethyl, Hydroxyethyl.

Auch die Alkylenreste B können geradkettig oder verzweigt oder auch substituiert sein. Es kommen z.B. Ethylen, 1,3-Propylen, 1,2-Propylen, 1,2-Butylen, 1,6-Hexylen, 2-Hydroxy-1,3-propylen oder 2-Chlor-1,3-propylen in Frage.

Unter Phenylresten sind in dieser Anmeldung generell unsubstituierte oder substituierte Phenylreste zu verstehen. Als Substituenten kommen z.B. $C_1$-$C_4$-Alkyl, $C_1$-$C_4$-Alkoxy, Brom, Chlor, Nitro oder $C_1$-$C_4$-Alkylcarbonylamino in Betracht.

Halogen bedeutet in dieser Anmeldung generell Fluor, Brom oder vor allem Chlor.

Die bevorzugten Bedeutungen von X sind Wasserstoff, Methyl, Methoxy, Chlor oder Brom, wobei Wasserstoff und Methyl besonders bevorzugt sind. Y bedeutet vorzugsweise Chlor, Methyl, Methoxy, Methoxyethyl oder Methoxyethoxy oder vor allem Wasserstoff.

Die bevorzugte Bedeutung von R ist $C_1$-$C_4$-Alkyl, welches gegebenenfalls substituiert ist durch Hydroxy, $C_1$-$C_4$-Alkoxy oder Phenyl. In besonders bevorzugten Verbindungen der Formel (1) ist R Methyl, Ethyl oder Benzyl.

R und Y können zusammen mit dem Stickstoffatom und den beiden sie verbindenden C-Atomen einen 5- oder 6-gliedrigen Ring bilden, welcher gegebenenfalls ein Sauerstoffatom als weiteres Heteroatom enthalten kann. Geeignete Substituenten für diese Ringe sind z.B. Hydroxy, Methyl, Methoxy, Chlor oder Phenyl. Vorzugsweise bilden R und Y zusammen mit dem Stickstoffatom und den beiden sie verbindenden C-Atomen einen 6-Ring, welcher unsubstituiert ist oder 1 bis 3 Methylgruppen trägt.

B stellt vorzugsweise einen geradkettigen oder verzweigten Alkylenrest mit 2 bis 4 Kohlenstoffatomen dar, welcher gegebenenfalls durch Hydroxy substituiert ist. Insbesondere bevorzugt sind die Dispersionsfarbstoffe der Formel (1), bei denen B Ethylen oder 1,3-Propylen ist.

Stellt A einen Rest der Formel (2) dar, so bedeutet W vorzugsweise $C_1$-$C_4$-Alkyl, $C_1$-$C_4$-Alkoxy oder Chlor und n bedeutet vorzugsweise 0, 1 oder 2.

Ist A ein Rest der Formel (3) oder (4), so bedeutet Q vorzugsweise Methyl oder vor allem Wasserstoff. V bedeutet vor allem Chlor und m ist vorzugsweise entweder 0 oder 4.

Wegen der leichten Zugänglichkeit sind Farbstoffe der Formel (1), worin A einen Rest der Formel (3) oder insbesondere der Formel (2) darstellt, bevorzugt.

Wegen ihrer guten färberischen Eigenschaften sind vor allen Dingen die Farbstoffe der Formel

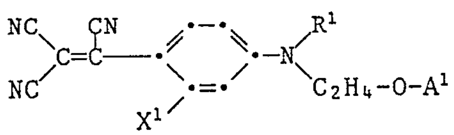

(5)

von Interesse, worin

$X^1$ Wasserstoff oder Methyl,

$R^1$ Methyl, Ethyl oder Benzyl und

$A_1$ ein Rest der Formel

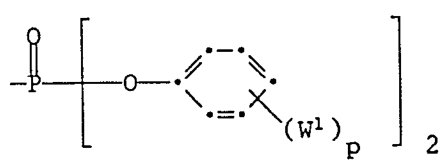

(6)

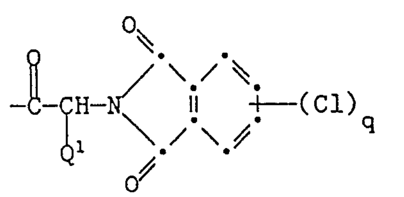

(7)

oder

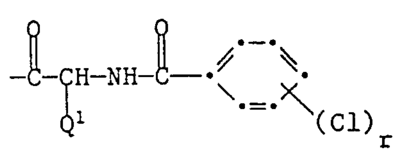

(8)

ist, wobei

$W^1$ $C_1$-$C_4$-Alkyl oder -Alkoxy oder Chlor,
p 0, 1 oder 2,
$Q^1$ Methyl oder vor allem Wasserstoff,
q 0 oder 4 und
r 0, 1 oder 2 bedeutet.

Die Verbindungen der Formel (1) werden auf an sich bekannte Art und Weise hergestellt, beispielsweise indem man eine Verbindung der Formel

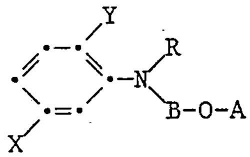
(9)

mit Tetracyanethylen umsetzt, oder indem man eine Verbindung der Formel

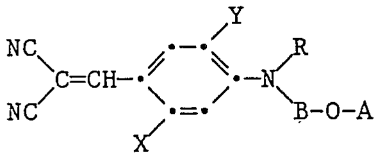
(10)

mit einem Cyanid und anschliessend mit einem Oxidationsmittel umsetzt.

Die Verbindungen der Formeln (9) und (10) sind neu und stellen weitere Gegenstände der vorliegenden Erfindung dar. Sie können auf an sich bekannte Art und Weise erhalten werden.

Die Verbindungen der Formel (9) können z.B. erhalten werden durch Umsetzung einer Verbindung der Formel
Hal - B - O - A (11)
mit einem Anilinderivat der Formel

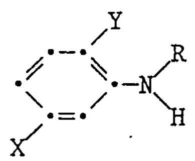
(12)

wobei man die Verbindungen der Formel (11) z.B. durch Umsetzung einer Verbindung der Formel
H - O - A (13)
oder einer Verbindung der Formel
Hal - A (16)
mit einer Verbindung der Formel
Hal - B - OH (14)
erhält.

Die Verbindungen der Formel (9) können auch erhalten werden, indem man auf an sich bekannte Art eine Verbindung der Formel

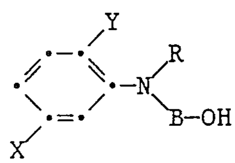
(15)

mit einer Verbindung der Formel
Hal - A (16)
umsetzt.

Die Verbindungen der Formeln (15) und (16) sind bekannt oder können auf an sich bekannte Art und Weise hergestellt werden.

Bei den Formeln (9) bis (16) weisen A, B, X, Y und R die unter der Formel (1) angegebene Bedeutung auf und Hal bedeutet jeweils Chlor oder Brom.

Die Verbindungen der Formel (11), (12), (13) und (14) sind ebenfalls bekannt oder lassen sich auf bekannte Art und Weise herstellen. Bei der Umsetzung der Verbindung (13) oder (16) mit der Verbindung (14) arbeitet man nach den bekannten Verfahrensweisen der Veresterung, gegebenenfalls unter Zusatz der dafür üblichen Lösungsmittel. Die Komponenten (13) und (14) bzw. (13) und (16) können in stöchiometrischem Verhältnis eingesetzt werden, ein Ueberschuss an einer der Komponenten, vorzugsweise der Verbindung (14) bzw. (16), erweist sich jedoch oft als günstiger.

Die Reaktionstemperatur liegt etwa zwischen 80 und 150° C, vorzugsweise zwischen 100 und 130° C und die Reaktionsdauer beträgt, je nach Temperatur und Reaktionspartnern etwa 1 bis 20 Stunden. Nach Beendigung der Umsetzung wird die evtl. im Ueberschuss eingesetzte Komponente (14) entfernt und anschliessend die erhaltene Verbindung der Formel (11) mit einem Anilinderivat der Formel (12) umgesetzt.
Auch diese Umsetzung wird vorzugsweise in einem der obengenannten Lösungsmittel durchgeführt. Die Temperatur liegt normalerweise oberhalb 100° C, insbesondere zwischen 120 und 200° C und vor allem zwischen 140 und 180° C.

Die Komponenten (11) und (12) können in stöchiometrischem Verhältnis eingesetzt werden, normalerweise setzt man jedoch die leichter zugängliche Komponente, meist das Anilinderivat (12), im Ueberschuss ein, z.B. in 10%-igem Ueberschuss.
Nach Beendigung der Reaktion wird auf übliche Weise aufgearbeitet, z.B. indem man den Ueberschuss an der Komponente (12) und das Lösungsmittel entfernt und den Rückstand gegebenenfalls reinigt, z.B. durch Umkristallisation.
Sowohl bei der Umsetzung der Verbindungen (16) und (14) als auch bei der Umsetzung der Verbindungen (11) und (12) arbeitet man in Gegenwart einer Base, wobei sowohl organische als auch anorganische Basen geeignet sind, z.B. Pyridin, Piperidin, Triethylamin, Natrium- oder Kaliumcarbonat oder -hydrogencarbonat. Diese Base wird im allgemeinen in geringem Ueberschuss, z.B. in 10%-igem Ueberschuss, eingesetzt.
Die gesamte Herstellung der Verbindung (9) lässt sich auch als sogenannte Eintopfreaktion durchführen, indem man für die beiden Reaktionsschritte das gleiche Lösungsmittel einsetzt und die Verbindung (11) nicht isoliert.

Die bevorzugte Herstellungsmethode für Verbindungen der Formel (10) besteht darin, dass man eine Verbindung der Formel

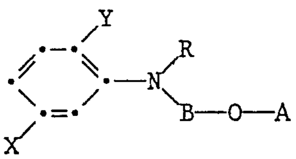

(9)

zunächst in den Aldehyd der Formel

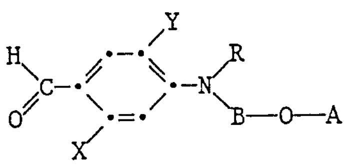

(17)

umwandelt und diesen dann mit Malonsäuredinitril zu einer Verbindung der Formel (10) umsetzt.

Die Umwandlung der Verbindung (9) in einen Aldehyd der Formel (17) erfolgt z.B. unter den bekannten Bedingungen der Vilsmeier-Synthese, z.B. mit Phosphorylchlorid und Dimethylformamid oder N-Methyl-formanilid oder mit Phosgen und Dimethylformamid.

Auch die Kondensation des Aldehyds der Formel (17) mit Malonsäuredinitril erfolgt unter an sich bekannten Reaktionsbedingungen, z.B. bei einer Temperatur zwischen etwa 20 und 100° C in einem organischen Lösungsmittel, z.B. einem aliphatischen Alkohol und in Gegenwart eines Katalysators, wie z.B. Piperidin. Die erhaltene Verbindung der Formel (10) wird anschliessend auf an sich bekannte Art mit einem Cyanid und danach mit einem Oxidationsmittel umgesetzt.

Vorzugsweise führt man diese Reaktionen als Eintopfreaktion, d.h. ohne Isolierung der Zwischenstufe (10), und ebenfalls in einem inerten Lösungsmittel durch. Als Cyanid setzt man vor allem Kalium- oder Natriumcyanid ein und als Oxidationsmittel insbesondere Brom.

Die Umsetzung mit dem Cyanid erfolgt bevorzugt bei etwa 20 bis 100° C und die Umsetzung mit dem Oxidationsmittel bei etwa 0 bis 20° C.

Die Umsetzung der Verbindungen der Formel (9) mit Tetracyanethylen erfolgt ebenfalls auf an sich bekannte Art und Weise, vorzugsweise in einem inerten Lösungsmittel bei einer Temperatur zwischen etwa 20 und 100° C, wobei die Reaktionskomponenten in etwa äquivalenten Mengen eingesetzt werden.

Als inertes Lösungsmittel für die vorstehenden Reaktionen kommen z.B. Halogenverbindungen wie Chloroform oder Chlorbenzol, Ether, aromatische Verbindungen, wie Benzol, Toluol oder Xylol, insbesondere jedoch Tetrahydrofuran oder Dimethylformamid in Frage.

Die Isolierung der Farbstoffe der Formel (1) erfolgt z.B. indem man die Reaktionslösungen in Eiswasser giesst, den ausgeschiedenen Farbstoff abfiltriert, eventuell wäscht und trocknet.

Die erfindungsgemässen Verbindungen der Formel (1) können als Farbstoffe zum Färben und Bedrucken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Verbindungen gefärbt oder bedruckt werden.

Als halbsynthetische Textilmaterialien kommen vor allem Cellulose 2 1/2-Acetat und Cellulosetriacetat in

Frage.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. solchen aus $\alpha,\alpha$-Dimethyl-4,4′-dihydroxy-diphenylmethan und Phosgen, aus Fasern auf Polyvinylchlorid- sowie Polyamid-Basis.

Die Applikation der erfindungsgemässen Verbindungen auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 140°C. Cellulose-2 1/2-acetat färbt man vorzugsweise zwischen ungefähr 65 bis 85°C und Cellulosetriacetat bei Temperaturen bis zu 115°C.

Die neuen Farbstoffe färben im Färbebad gleichzeitig anwesende Wolle und Baumwolle nicht oder nur wenig an (sehr gute Reserve), so dass sie auch gut zum Färben von Polyester/Wolle- und Polyester/Cellulosefaser-Mischgeweben verwendet werden können.

Die erfindungsgemässen Farbstoffe eignen sich aber insbesondere zum Färben nach dem Thermosol-Verfahren.

Das genannte Textilmaterial kann dabei in den verschiedensten Verarbeitungsformen vorliegen, wie z.B. als Faser, Faden oder Vlies, als Gewebe oder Gewirke.

Es ist vorteilhaft, die erfindungsgemässen Farbstoffe vor ihrer Verwendung in ein Farbstoffpräparat überzuführen. Hierzu wird der Farbstoff vermahlen, so dass seine Teilchengrösse im Mittel zwischen 0,01 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser Druckpasten und Färbebäder herstellen.

Beim Bedrucken wird man die üblichen Verdickungsmittel verwenden, z.B. modifizierte oder nichtmodifizierte natürliche Produkte, beispielseweise Alginate, British-Gummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Die erfindungsgemässen Farbstoffe verleihen den genannten Materialien, vor allem dem Polyestermaterial, egale orangefarbene oder rote Farbtöne von sehr guten Gebrauchs-Echtheiten, wie vor allem guter Lichtechtheit, Thermofixier-, Plissier-, Chlor- und Nassechtheit wie Wasser-, Schweiss-und Waschechtheit; die Ausfärbungen sind ferner gekennzeichnet durch eine gute pH-Stabilität und sehr gute Reibechtheit. Es werden ausserdem sehr farbstarke Färbungen erzielt. Besonders hervorzuheben ist die gute Thermomigrierechtheit der erhaltenen Färbungen.

Die erfindungsgemässen Farbstoffe können auch gut verwendet werden zur Herstellung von Mischnuancen zusammen mit anderen Farbstoffen. Selbstverständlich können auch Mischungen der erfindungsgemässen Farbstoffe untereinander verwendet werden.

Die vorstehend genannte Verwendung der erfindungsgemässen Azoverbindungen der Formel (1) stellt ebenso einen Gegenstand der vorliegenden Erfindung dar wie ein Verfahren zum Färben oder Bedrucken von halb-synthetischem oder synthetischem hydrophobem Fasermaterial, insbesondere Textilmaterial, das darin besteht, eine oder mehrere Verbindungen der Formel (1) auf das genannte Material aufzubringen oder es diesem einzuverleiben. Das genannte hydrophobe Fasermaterial ist vorzugsweise textiles Polyestermaterial. Weitere Substrate, die durch das erfindungsgemässe Verfahren behandelt werden können sowie bevorzugte Verfahrensbedingungen sind vorstehend bei der näheren Erläuterung der Verwendung der erfindungsgemässen Verbindungen zu finden.

Ein weiterer Gegenstand der Erfindung ist das durch das genannte Verfahren gefärbte bzw. bedruckte hydrophobe Fasermaterial, vorzugsweise Polyester-Textilmaterial.

Die folgenden Beispiele veranschaulichen die Erfindung weiter, ohne sie darauf zu beschränken. Teile und Prozente beziehen sich, sofern nicht anders angegeben, auf das Gewicht.

Beispiel 1:

In eine Lösung von 5 g N-Ethyl-N-(2-hydroxyethyl)-anilin in 18 ml Pyridin trägt man innerhalb von 3 Minuten 8 g rohes 2-Phthalimidoacetylchlorid ein, welches frisch hergestellt wurde durch Umsetzung von Phthalimidoessigsäure mit Thionylchlorid in Toluol mit Dimethylformamid als Katalysator und durch Eindampfen isoliert wurde. Die Temperatur steigt dabei auf 50°C an. Nach dreistündigem Rühren bei 60 bis 65°C gibt man weitere 3 g 2-Phthalimido-acetylchlorid zu und lässt 2 Stunden weiterreagieren. Das Reaktionsgemisch wird in 300 ml Ethylacetat aufgenommen, dreimal mit je 200 ml Wasser gewaschen, mit Natriumsulfat getrocknet und eingedampft. Man erhält ca. 15 g eines gelbbraunen Oels, das ungefähr 70 % der Verbindung der Formel

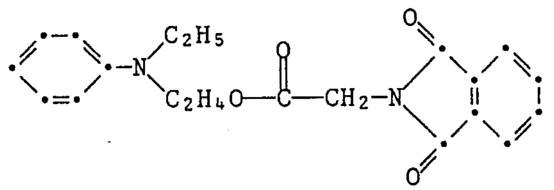

enthält. 5,0 g davon werden in 12 ml Pyridin gelöst und mit 1,4 g Tetracyanethylen versetzt. Das Reaktionsgemisch erwärmt sich auf 35°C. Nach 3 Stunden wird die rote Lösung unter Kühlung mit 10 ml Eisessig vermischt, dann auf 150 ml Eiswasser und 50 ml Ethanol ausgetragen, 30 Minuten bei 0 bis 5°C gerührt, der Niederschlag abfiltriert, mit Wasser gewaschen und im Vakuum bei 60°C getrocknet. Man erhält 5,3 g der rohen Verbindung der Formel

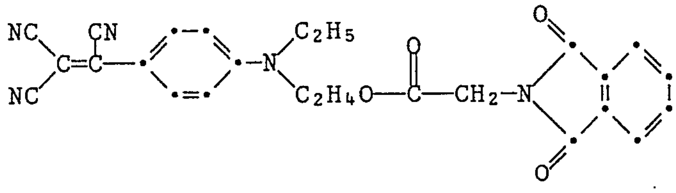

als rotbraunes Pulver. Chromatographie an Kieselgel mit Ethylacetat als Eluiermittel ergibt 1,58 g des reinen Farbstoffes als rotbraunes feines Kristallpulver vom Schmelzpunkt 160-161°C.

Beispiel 2:

3,7 g N-Ethyl-N-phthalimidoacetoxyethyl-anilin, dessen Herstellung im Beispiel 1 beschrieben ist, werden in 3,8 ml Dimethylformamid gelöst und anschliessend unter Kühlung innerhalb von 10 Minuten mit 4,6 g Phosphoroxychlorid versetzt. Man rührt 4 Stunden bei 50°C, trägt dann das Reaktionsgemisch unter Einhaltung einer Maximaltemperatur von 30°C in 20 ml Eiswasser und 2,5 ml 30-prozentige Natriumhydroxidlösung ein und zersetzt das Gemisch weiter durch Zugabe von 9 ml 30-prozentiger Natriumhydroxidlösung. Der schmierig ausgefallene Aldehyd der Formel

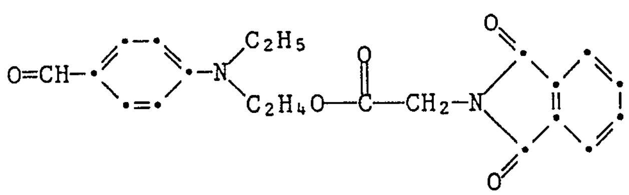

wird mit 50 ml Ethylacetat ausgeschüttelt, mit Wasser neutral gewaschen, mit Natriumsulfat getrocknet und eingedampft.

Die erhaltenen 3,4 g gelbbraunes Oel werden in 25 ml Methanol gelöst und während 45 Minuten bei 40-50°C in Gegenwart von 0,09 g Piperidin mit 0,7 g Malonsäuredinitril umgesetzt. Der entstandene gelbe Farbstoff der Formel

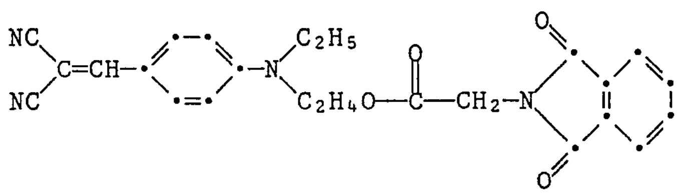

wird durch Abkühlen auf 5°C, Nutschen, Waschen mit kaltem Methanol und Trocknen isoliert. Ausbeute 2,15 g gelbbraunes Pulver vom Schmelzpunkt 171-172°C.

Der Dicyanvinylfarbstoff wird in je 10 ml Dimethylformamid und Methanol gelöst, bei 60°C mit 0,26 g Natriumcyanid in 0,6 ml Wasser versetzt und die rote Lösung bei 10-15°C innerhalb von 2 Stunden gleichzeitig mit 1,2 g Brom zu einer Lösung von 0,5 g wasserfreiem Natriumacetat und 0,05 g Brom in 5 ml Methanol getropft. Fällen mit 10 ml Eiswasser, Nutschen, Waschen mit Wasser und Trocknen liefert 1,4 g rotbraunes Pulver vom Schmelzpunkt 150-154°C, das gemäss Dünnschichtchromatogramm eine etwas unreinere Form des im Beispiel 1 beschriebenen Farbstoffes ist.

Beispiel 3:

Ersetzt man im Beispiel 1 das Phthalimidoacetylchlorid durch die äquivalente Menge Hippurylchlorid (Benzoylamidoacetylchlorid), so erhält man über die entsprechende, ebenfalls nicht gereinigte Zwischenstufe den Farbstoff der Formel

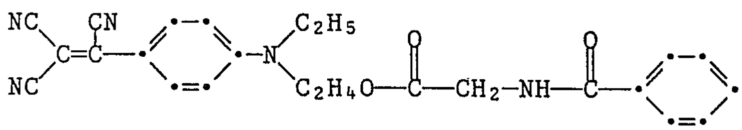

als 4,28 g braunrotes Pulver. Nach Umkristallisation aus Methylenchlorid weist der Farbstoff einen Schmelzpunkt von 142-144°C auf.

Beispiel 4:

13,2 g N-Ethyl-N-(2-hydroxyethyl)-anilin werden in 48 ml Pyridin gelöst und innerhalb von 20 Minuten bei 15-20°C mit 26 g Phosphorsäure-diphenylester-chlorid versetzt. Nach einstündigem Rühren bei Raumtemperatur wird in 500 ml Ethylacetat aufgenommen, zweimal mit Wasser gewaschen, mit Natriumsulfat getrocknet und eingedampft. Man erhält 32,4 g der Verbindung der Formel

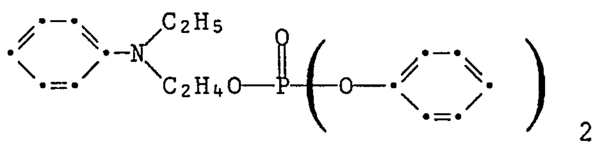

als gelbbraunes Oel.

8,0 g davon werden in 7,2 g Dimethylformamid gelöst und innerhalb von 10 Minuten unter Einhaltung einer Maximaltemperatur von 45°C mit 4,6 g Phosphoroxychlorid versetzt. Nach Aufarbeitung wie im Beispiel 2 beschrieben erhält man 7,0 g des Aldehydes der Formel

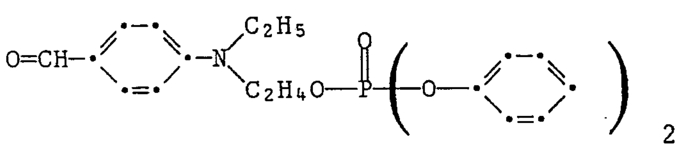

als gelbbraunes Oel. 3,0 g davon werden in der im Beispiel 2 angegebenen Weise mit Malondinitril weiter umgesetzt zu 3,5 g des amorphen, gelben Dicyanvinylfarbstoffes der Formel

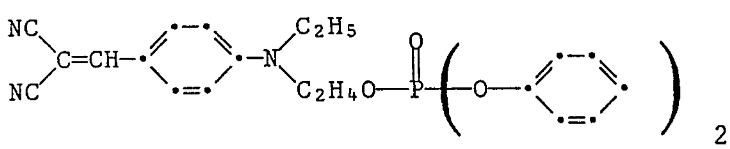

aus dem man schliesslich mit Natriumcyanid und Brom analog zu Beispiel 2, aber ohne chromatographische Reinigung den roten Farbstoff der Formel

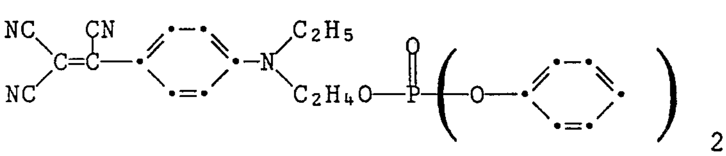

als rotbraunes Pulver vom Schmelzpunkt 132-134°C erhält.

Den gleichen Farbstoff (Smp. 133-134°C, ebenfalls ohne chromatographische Reinigung) erhält man durch Umsetzung des N-Ethyl-N-diphenoxyphosphoryloxyethyl-anilins mit Tetracyanethylen wie in den Beispielen 1 und 3 beschrieben.

Beispiel 5:

Ersetzt man im Beispiel 4 das Phosphorsäure-diphenylesterchlorid durch die aequivalente Menge Chlorid des Phosphorsäure-diesters von 2-Methylphenol, so erhält man unter sonst gleichen Bedingungen den Farbstoff der Formel,

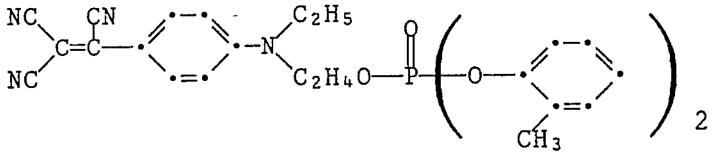

Smp. 105-106°C

welcher Textilmaterial aus Polyester in roten Nuancen mit guten Echtheiten färbt.

Beispiel 6:

Ersetzt man im Beispiel 4 das Phosphorsäure-diphenylesterchlorid durch die aequivalente Menge Chlorid des Phosphorsäure-diesters von 4-Chlorphenol, so erhält man unter sonst gleichen Bedingungen den Farbstoff der Formel,

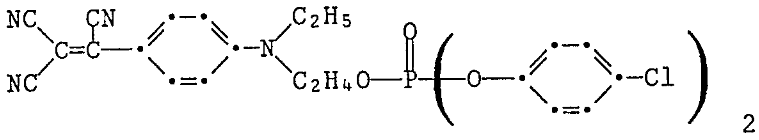

Smp. 129-130°C

welcher Textilmaterial aus Polyester in roten Nuancen mit guten Echtheiten färbt.

Beispiel 7:

Ersetzt man im Beispiel 1 das N-Ethyl-N-(2-hydroxyethyl)-anilin durch eine äquivalente Menge des Tetrahydrochinolins der Formel

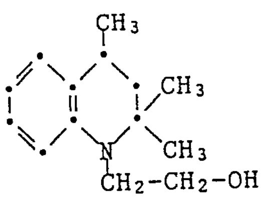

so erhält man den Farbstoff der Formel

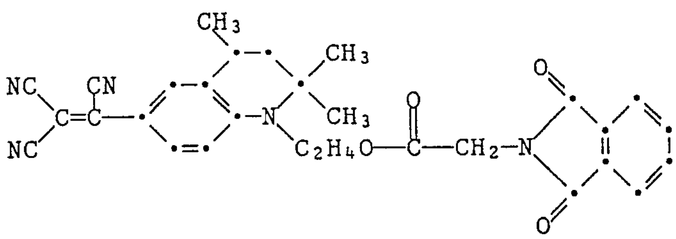

welcher Textilmaterial aus Polyester in roten Tönen färbt.

Beispiel 8:

Ersetzt man im Beispiel 3 das N-Ethyl-N-(2-hydroxyethyl)-anilin durch eine äquivalente Menge des im Beispiel 7 verwendeten Tetrahydrochinolins, so erhält man den Farbstoff der Formel

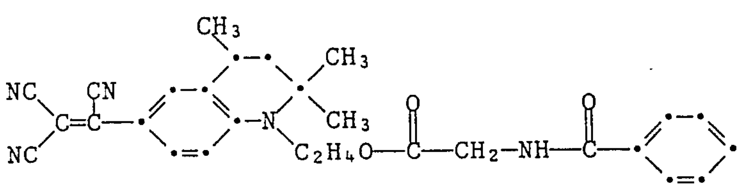

welcher Textilmaterial aus Polyester in roten Tönen färbt.

Beispiel 9:

Ersetzt man im Beispiel 4 das N-Ethyl-N-(2-hydroxyethyl)-anilin durch eine äquivalente Menge des im Beispiel 7 verwendeten Tetrahydrochinolins, so erhält man den Farbstoff der Formel

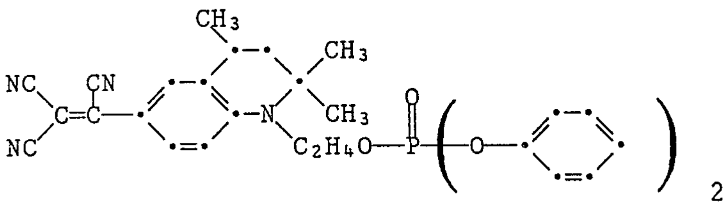

welcher Textilmaterial aus Polyester in roten Tönen färbt.

Beispiele 10-36:

Auf analoge Art wie in den Beispielen 1-6 beschrieben können auch die in der nachstehenden Tabelle aufgeführten Farbstoffe hergestellt werden.

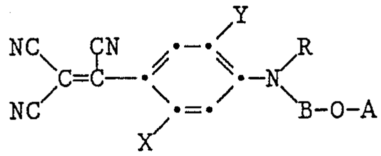

| Beispiel | X | Y | R | B | A | Farbe auf PES |
|---|---|---|---|---|---|---|
| 10 | H | H | $-C_2H_5$ | $-(CH_2)_3-$ | 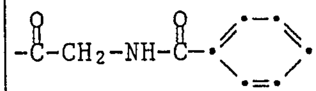 | Rot |
| 11 | $CH_3$ | H | $-C_2H_5$ | $-(CH_2)_3-$ | 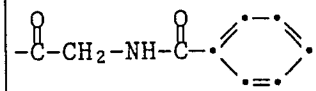 | Rubin |
| 12 | H | H | $-C_2H_5$ | $-(CH_2)_3-$ | 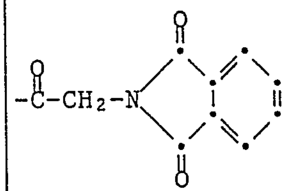 | Rot |
| 13 | H | H | $-(CH_2)_2CH_3$ | $-(CH_2)_2-$ | 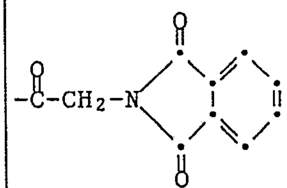 | Rot |
| 14 | H | H | $-CH_3$ | $-(CH_2)_6-$ | 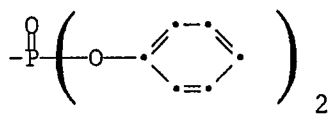 | Rot |
| 15 | $CH_3$ | H | $-CH_3$ | $-(CH_2)_6-$ | 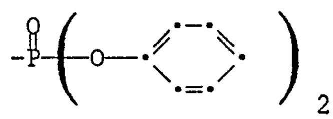 | Rubin |
| 16 | H | Cl | $-C_2H_5$ | $-(CH_2)_2-$ | 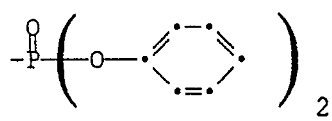 | Rot |
| 17 | H | H | $-C_2H_5$ | $-CH_2-CH-$<br>$CH_3$ | 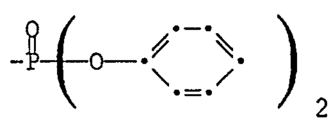 | Rot |
| 18 | H | H | $-C_2H_5$ | $-CH-CH_2-$<br>$CH_3$ | 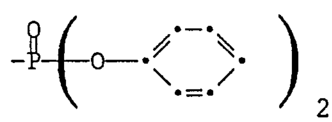 | Rot |

| Beispiel | X | Y | R | B | A | Farbe auf PES |
|---|---|---|---|---|---|---|
| 19 | Cl | H | $-C_2H_5$ | $-(CH_2)_2-$ | 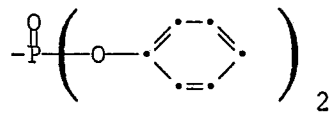 | Rot |
| 20 | H | H | $-CH_3$ | $-(CH_2)_2-$ | 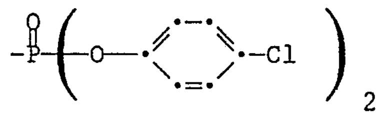 | Rot |
| 21 | H | H | $-CH_3$ | $-(CH_2)_2-$ | 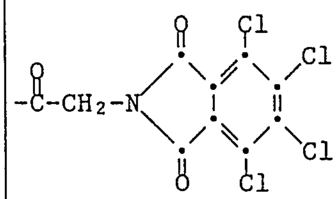 | Rot |
| 22 | H | H | $-C_2H_5$ | $-(CH_2)_2-$ | 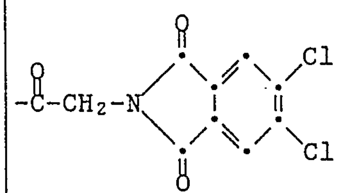 | Rot |
| 23 | H | H | $-C_2H_5$ | $-(CH_2)_2-$ | 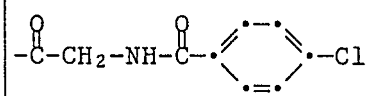 | Rot |
| 24 | H | H | $-CH_3$ | $-(CH_2)_2-$ | 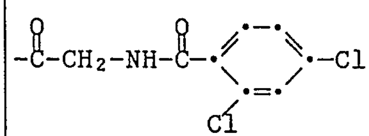 | Rot |
| 25 | H | H | 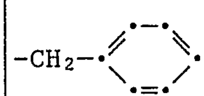 | $-(CH_2)_6-$ | 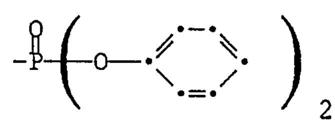 | Rot |
| 26 | H | H | $-C_2H_5$ | $-C_2H_4-$ | 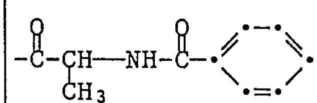 | Rot |
| 27 | H | H | $-C_2H_5$ | $-C_2H_4-$ | 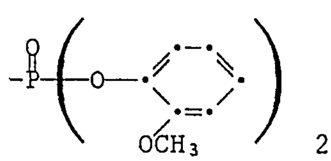 | Rot |
| 28 | H | H | $-C_2H_5$ | $-C_2H_4-$ | 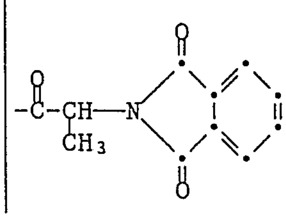 | Rot |

| Beispiel | X | Y | R | B | A | Farbe auf PES |
|---|---|---|---|---|---|---|
| 29 | H | H | $-C_2H_5$ | $-C_2H_4-$ | 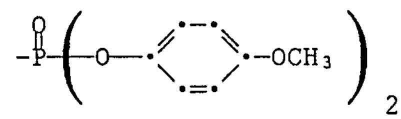 | Rot |
| 30 | H | H | $-C_2H_5$ | $-C_2H_4-$ | 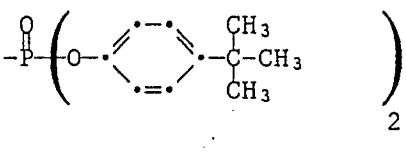 | Rot |
| 31 | H | H | $-C_2H_5$ | $-C_2H_4-$ | 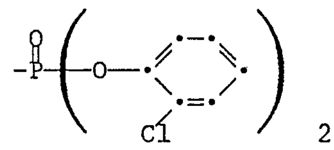 | Rot |
| 32 | H | H | $-CH_3$ | $-C_2H_4-$ | 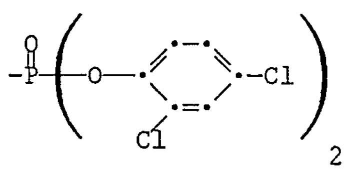 | Rot |
| 33 | H | H | $-CH_3$ | $-C_2H_4-$ | 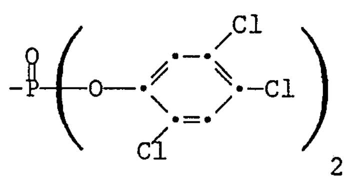 | Rot |
| 34 | H | H | $-CH_3$ | $-C_2H_4-$ | 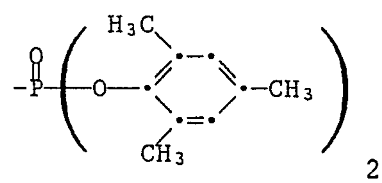 | Rot |
| 35 | H | H | $-CH_3$ | $-C_2H_4-$ | 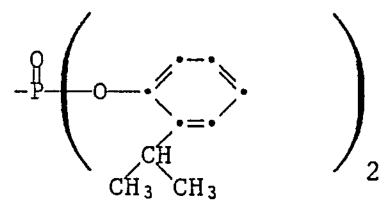 | Rot |
| 36 | H | H | $-CH_3$ | $-C_2H_4-$ | 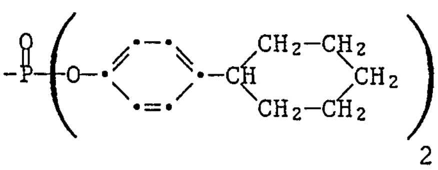 | Rot |

Beispiel 37:

Man mischt 1 Teil des trockenen, coupagefreien Farbstoffs gemäss Beispiel 1 in einer Sandmühle zusammen mit 2 Teilen Dinaphthylmethandisulfonat (Na-Salz), 34 Teilen Quarzsand und 17 Teilen Wasser und mahlt das Gemisch so lange, bis eine Korngrösse von etwa 2 µ oder kleiner erreicht ist. Die entstehende Suspension wird vom Sand getrennt und stellt dann eine stabile Flüssigformulierung dar. Sie kann aber auch

der Sprühtrocknung unterworfen werden, wobei ein pulverförmiges Färbepräparat erhalten wird.

Auf die gleiche Weise kann man auch stabile flüssige und feste Präparate der Farbstoffe der Beispiele 2-6 herstellen.

Beispiel 38:

Polyethylenglykolterephthalatgewebe wird auf einem Foulard bei 40°C mit einer Flotte folgender Zusammensetzung imprägniert:

20 Teile des gemäss Beispiel 37 erhaltenen Farbstoffpräparates fein dispergiert in
10 Teilen Natriumalginat,
20 Teilen Octylphenolpolyglykoläther und
930 Teilen Wasser.

Das auf ca. 60 % abgequetschte Gewebe wird bei 100°C getrocknet und anschliessend während 60 Sekunden bei einer Temperatur von 210°C fixiert. Die gefärbte Ware wird mit Wasser gespült, geseift oder reduktiv gereinigt und getrocknet. Man erhält eine brillante, lichtechte rote Färbung, welche sich vor allem durch eine gute Thermomigrationsechtheit auszeichnet.

Beispiel 39:

2 Teile des gemäss Beispiel 37 erhaltenen Farbstoffpräparates werden in 4000 Teilen Wasser, enthaltend 12 Teile des Natriumsalzes von o-Phenylphenol, 2 Teile Ammoniumsulfat sowie 2 Teile des Natriumsalzes der Dinaphthylmethandisulfonsäure, dispergiert. Dann färbt man 100 Teile Garn aus Polyethylenglykolterephthalat 90 Minuten lang bei 95 bis 98°C in dieser Flotte.

Die Färbung wird anschliessend gespült und mit wässriger Natronlauge und einem Dispergator nachbehandelt. Man erhält so eine licht- und sublimierechte rote Färbung.

Beispiel 40:

1 Teil des gemäss Beispiel 4 erhaltenen Farbstofsf wird mit 2 Teilen einer 50%igen wässerigen Lösung des Natriumsalzes der Dinaphthylmethandisulfonsäure nass vermahlen und getrocknet.

Dieses Farbstoffpräparat wird mit 40 Teilen einer 10%igen wässerigen Lösung des Natriumsalzes der N-Benzylheptadecyl-benzimidazoldisulfonsäure verrührt und 4 Teile einer 40%igen Essigsäurelösung zugegeben. Durch Verdünnen mit Wasser wird daraus ein Färbebad von 4000 Teilen bereitet.

In dieses Bad geht man bei 50°C mit 100 Teilen eines Polyesterfaserstoffes ein, steigert die Temperatur innert einer halben Stunde auf 120 bis 130°C und färbt eine Stunde in geschlossenem Gefäss bei dieser Temperatur. Anschliessend wird gut gespült. Man erhält eine rote Färbung mit guten Echtheiten, insbesondere guter Sublimations- und Thermomigrationsechtheit.

## Patentansprüche

1. Dispersionsfarbstoffe der Formel

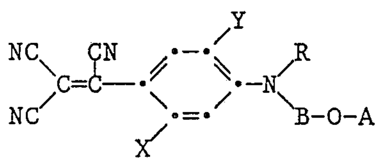

(1)

worin

X Wasserstoff, $C_1$-$C_4$-Alkyl, $C_1$-$C_4$-Alkoxy oder Halogen,

Y Wasserstoff, Halogen, $C_1$-$C_4$-Alkyl, $C_1$-$C_4$-Alkoxy, $C_1$-$C_4$-Alkoxy-$C_1$-$C_4$-alkyl oder $C_1$-$C_4$-Alkoxy-$C_1$-$C_4$-alkoxy,

R Wasserstoff, $C_1$-$C_{12}$-Alkyl, $C_2$-$C_{12}$-Alkenyl oder Phenyl bedeutet, oder Y und R, zusammen mit dem Stickstoffatom und den beiden sie verbindenden C-Atomen, einen 5- oder 6-Ring bilden, und

B einen geradkettigen oder verzweigten $C_2$-$C_6$-Alkylenrest,

A einen Rest der Formel

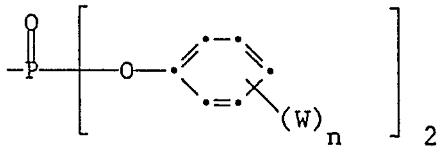

(2)

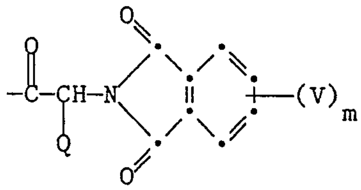

(3)

oder

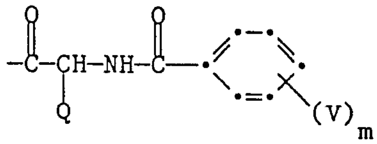

(4)

bedeutet, wobei
W $C_1$-$C_9$-Alkyl, $C_5$-$C_7$-Cycloalkyl, Phenyl, Halogen oder $C_1$-$C_4$-Alkoxy,
n 0, 1, 2 oder 3,
Q H oder $C_1$-$C_4$-Alkyl,
V Halogen und
m 0, 1, 2, 3 oder 4 bedeuten.

2. Farbstoffe gemäss Anspruch 1, worin X Wasserstoff, Methyl, Methoxy, Chlor oder Brom ist.

3. Farbstoffe gemäss Anspruch 2, worin X Wasserstoff oder Methyl ist.

4. Farbstoffe gemäss einem der Ansprüche 1-3, worin Y Wasserstoff, Chlor, Methyl, Methoxy, Methoxyethyl oder Methoxyethoxy ist.

5. Farbstoffe gemäss Anspruch 4, worin Y Wasserstoff ist.

6. Farbstoffe gemäss einem der Ansprüche 1-5, worin R $C_1$-$C_4$-Alkyl ist, welches durch Hydroxy, $C_1$-$C_4$-Alkoxy oder Phenyl substituiert sein kann.

7. Farbstoffe gemäss Anspruch 6, worin R Methyl, Ethyl oder Benzyl ist.

8. Farbstoffe gemäss einem der Ansprüche 1-3, worin R und Y zusammen mit dem Stickstoffatom und den beiden sie verbindenden C-Atomen einen 6-Ring bilden, welcher unsubstituiert ist oder 1 bis 3 Methylgruppen trägt.

9. Farbstoffe gemäss einem der Ansprüche 1-8, worin B einen Alkylenrest darstellt, welcher unsubstituiert ist oder durch Hydroxy substituiert ist.

10. Farbstoffe gemäss Anspruch 9, worin B Ethylen oder 1,3-Propylen bedeutet.

11. Farbstoffe gemäss einem der Ansprüche 1-10, worin A einen Rest der Formel (3) oder vor allem der Formel (2) darstellt.

12. Farbstoffe der Formel

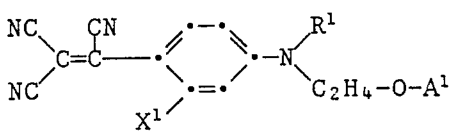

(5)

worin
$X^1$ Wasserstoff oder Methyl,
$R^1$ Methyl, Ethyl oder Benzyl und
$A_1$ ein Rest der Formel

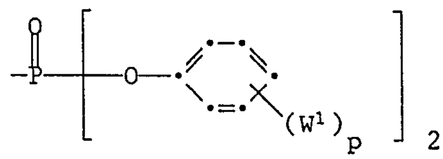

(6)

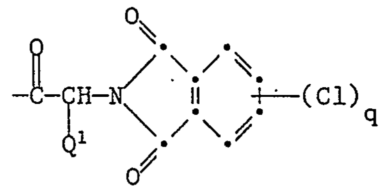

(7)

oder

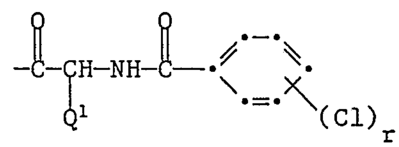

(8)

ist, wobei
$W^1$ $C_1$-$C_4$-Alkyl oder -Alkoxy oder Chlor,
p 0, 1 oder 2,
$Q^1$ Methyl oder vor allem Wasserstoff,
q 0 oder 4 und
r 0, 1 oder 2 bedeutet.

13. Verfahren zur Herstellung von Dispersionsfarbstoffen der Formel (1) gemäss Anspruch 1, dadurch gekennzeichnet, dass man eine Verbindung der Formel

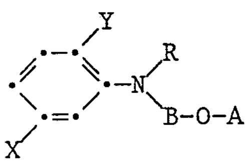

(9)

mit Tetracyanethylen umsetzt, oder dass man eine Verbindung der Formel

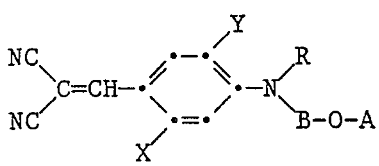

(10)

mit einem Cyanid und anschliessend mit einem Oxidationsmittel umsetzt.

14. Verbindungen der Formel

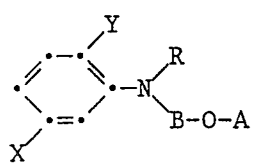

(9)

worin X, Y, R, B und A die im Anspruch 1 angegebene Bedeutung aufweisen.

15. Verfahren zur Herstellung von Verbindungen der Formel (9) gemäss Anspruch 14, dadurch gekennzeichnet, dass man eine Verbindung der Formel

Hal - B - O - A (11)

mit einem Anilinderivat der Formel

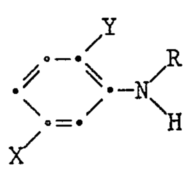

(12)

umsetzt oder dass man eine Verbindung der Formel

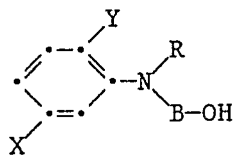

(15)

mit einer Verbindung der Formel

Hal - A (16)

umsetzt, wobei X, Y, R, B und A die im Anspruch 1 angegebene Bedeutung aufweisen und Hal Chlor oder Brom bedeutet.

16. Verbindungen der Formel

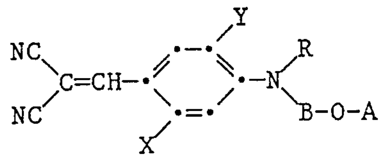

(10)

worin X, Y, R, B und A die im Anspruch 1 angegebene Bedeutung aufweisen.

17. Verfahren zur Herstellung von Verbindungen der Formel (10) gemäss Anspruch 16, dadurch gekennzeichnet, dass man eine Verbindung der Formel

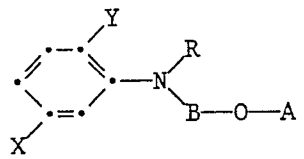

(9)

zunächst in den Aldehyd der Formel

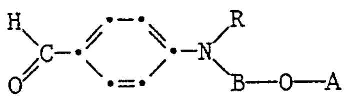

(17)

umwandelt und diesen dann mit Malonsäuredinitril zu einer Verbindung der Formel (10) umsetzt.

18. Verwendung der Dispersionsfarbstoffe gemäss Anspruch 1 zum Färben oder Bedrucken von halbsynthetischem oder synthetischem hydrophobem Fasermaterial, insbesondere Textilmaterial.

19. Verwendung nach Anspruch 18 zum Färben oder Bedrucken von Textilmaterial aus Polyesterfasern.

20. Verfahren zum Färben oder Bedrucken von halbsynthetischem oder synthetischem hydrophobem Fasermaterial, insbesondere Textilmaterial, dadurch gekennzeichnet, dass man eine oder mehrere der im Anspruch 1 definierten Verbindungen auf das gesamte Material aufbringt oder diesem einverleibt.

21. Verfahren nach Anspruch 20, worin das hydrophobe Fasermaterial, vorzugsweise Textilmaterial, aus Polyesterfasern besteht.

22. Das gemäss Anspruch 20 oder 21 gefärbte oder bedruckte Material.

23. Farbstoffpräparate, enthaltend einen Farbstoff gemäss Anspruch 1 sowie bei Dispersionsfarbstoffen übliche Zusätze.